(19) Europäisches Patentamt
European Patent Office
Office européen des brevets

(11) Veröffentlichungsnummer: **0 385 325 B1**

(12) **EUROPÄISCHE PATENTSCHRIFT**

(45) Veröffentlichungstag der Patentschrift: **18.11.93**

(51) Int. Cl.$^5$: **C07F 15/00**, B01J 31/16

(21) Anmeldenummer: **90103650.9**

(22) Anmeldetag: **26.02.90**

# (54) Cycloolefinkomplexe des Platins, Verfahren zu deren Herstellung sowie deren Verwendung als Katalysator.

(30) Priorität: **01.03.89 DE 3906514**

(43) Veröffentlichungstag der Anmeldung:
**05.09.90 Patentblatt 90/36**

(45) Bekanntmachung des Hinweises auf die Patenterteilung:
**18.11.93 Patentblatt 93/46**

(84) Benannte Vertragsstaaten:
**AT BE DE FR GB IT NL**

(56) Entgegenhaltungen:
**EP-A- 0 011 714**
**EP-A- 0 032 377**

**PATENT ABSTRACTS OF JAPAN, Band 3, Nr. 95 (C-55), 11 August 1979***

**INORGANIC AND NUCLEAR CHEMISTRY LETTERS, Band 4, Nr. 1, Januar 1968, New York, NY (US); G. MCCAULEY et al., Seiten 21-24***

(73) Patentinhaber: **Consortium für elektrochemische Industrie GmbH**
**Zielstattstrasse 20**
**D-81379 München(DE)**

(72) Erfinder: **Wenski, Guido, Dr.-Dipl.-Chem.**
**Thalkirchner Strasse 127**
**D-8000 München 70(DE)**
Erfinder: **Maier, Ludwig**
**Am alten Bad 3**
**D-8330 Eggenfelden(DE)**
Erfinder: **Eberle, Hans-Jürgen, Dr.-Dipl.-Chem.**
**Ambacher Strasse 36**
**D-8000 München 71(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft Cycloolefinkomplexe des Platins, Verfahren zu deren Herstellung aus cyclischen Olefinen und Platin(II)-Verbindungen sowie deren Verwendung als Katalysator bei der Anlagerung von Si-gebundenem Wasserstoff an aliphatische Mehrfachbindung.

Es ist bekannt, die Anlagerung von Si-gebundenem Wasserstoff an aliphatische Mehrfachbindung, die häufig als Hydrosilylierung bezeichnet wird, durch Katalysatoren, insbesondere Platin(II)-Verbindungen, zu fördern. Hierzu sei beispielsweise auf US-PS 3,814,730 (B.D.Karstedt, General Electric Company; ausgegeben am 4. Juni 1974) und EP-PS 0 032 377 (T.Lindner, Wacker-Chemie GmbH; ausgegeben am 19. September 1984) verwiesen. Der klassische und meistverwendete Hydrosilylierungskatalysator ist eine Lösung von $H_2PtCl_6 \cdot 6H_2O$ in 2-Propanol, die als wirksame Komponente den Olefinkomplex $H[(C_3H_6)PtCl_3]$ enthält und nach ihrem Entdecker als Speier-Katalysator bezeichnet wird (siehe: US-PS 2,823,218 (J.Speier, Dow Corning Corporation; ausgegeben am 11. Februar 1958) und R.A.Benkeser, J.Kang, J.Organomet.Chem. 158 (1980) C9-C12).

Ferner werden Platinkomplexe mit alicyclischen Dienen, wie Norbornadien-, 1,5-Cyclooctadien- und Dicyclopentadien-Platindichlorid, in den Veröffentlichungen JP-OS 79/76 529 (Shin-Etsu Chemical Industry Co., Ltd.; ausgegeben am 19. Juni 1979), JP-OS 79/76 530 (Shin-Etsu Chemical Industry Co., Ltd.; ausgegeben am 19. Juni 1979) und US-PS 4,276,252 (G.Kreis, Wacker-Chemie GmbH; ausgegeben am 30. Juni 1981) beschrieben. Obwohl die vorgenannten platinkatalysierten Hydrosilylierungsverfahren im allgemeinen zu guten Ergebnissen führen, sind sie aufgrund der hohen Gewichtsteile an metallischem Platin, die zur Erzielung der gewünschten Hydrosilylierungsgeschwindigkeit erforderlich sind, in den meisten Fallen kostenintensiv.

Es bestand daher die Aufgabe, stabile Platinkomplexe zu finden, welche die bekannten Katalysatorsysteme in ihrer Wirksamkeit bei guter Dosierbarkeit übertreffen und leicht sowie in hoher Ausbeute hergestellt werden können. Ferner sollen sich die Platinkomplexe gut zur Anlagerung von monomeren oder polymeren Siliciumverbindungen mit Si-gebundenem Wasserstoff an monomere oder polymere Verbindungen mit aliphatischer Mehrfachbindung eignen. Diese Aufgabe wird durch die Erfindung gelöst.

Gegenstand der Erfindung sind Cycloolefinkomplexe des Platins, Verfahren zu deren Herstellung sowie deren Verwendung als Katalysator der allgemeinen Formel

$$(cy) \cdot zPtX_2 ,$$

wobei (cy) ein unsubstituiertes oder alkylsubstituiertes Cycloolefin mit mindestens 12 Ringkohlenstoffatomen und mindestens zwei aliphatischen nicht-kumulierten Kohlenstoff-Kohlenstoff-Doppelbindungen oder ein Gemisch derartiger Cycloolefine, X gleiche oder verschiedene Halogenatome und/oder gleiche oder verschiedene gesättigte oder ungesättigte organische Reste und/oder gleiche oder verschiedene Organosiliciumreste und/oder gleiche oder verschiedene oligomere oder polymere anorganische Reste und/oder gleiche oder verschiedene anorganische Oxide und z eine Zahl zwischen 0,25 und 10 bedeutet und der Platingehalt der Cycloolefinkomplexe 10 bis 60 Gewichtsprozent beträgt, mit der Maßgabe, daß 1,5,9-Cyclododekatrien • $PtCl_2$ ausgenommen ist.

G. McCauley und H. Frye beschreiben in Inorg. Nucl. Chem. Letters 4 (1968) 21-4 die Darstellung von 1,5,9-Cyclododekatrien-Platindichlorid. Aus einer $Na_2PtCl_4$ und Cyclododekatrien enthaltenden benzolischen Lösung fallen nach mehreren Wochen geringe Mengen gelber Kristalle aus, die als 1,5,9-Cyclododekatrien-Platindichlorid identifiziert werden konnten. G. McCauley und H. Frye erwähnen weder die katalytische Eigenschaft dieser Verbindung noch die Möglichkeit, diesen Komplex mit einem von eins verschiedenen Molverhältnis von 1,5,9-Cyclododekatrien zu $PtCl_2$ herzustellen.

Bei den unsubstituierten oder alkylsubstituierten Cycloolefinen (cy) handelt es sich um Verbindungen mit mindestens 12 Ringkohlenstoffatomen, bevorzugt 12 bis 40 Ringkohlenstoffatomen, besonders bevorzugt 12 bis 24 Ringkohlenstoffatomen, und mindestens zwei, bevorzugt drei oder vier, nicht-kumulierten, bevorzugt nicht-kumulierten und nicht-konjugierten, Kohlenstoff-Kohlenstoff-Doppelbindungen, wobei Cycloolefine mit mindestens 14 Kohlenstoffatomen bevorzugt sind.

Als Alkylsubstituenten der Cycloolefine werden Alkylreste mit 1 bis 4 Kohlenstoffatom(en), wie der Methyl-, Ethyl-, n-Propyl, Isopropyl-, n-Butyl-, sec.-Butyl-. und tert.-Butylrest, bevorzugt, wobei der Methylrest besonders bevorzugt ist.

Bei dem im Cycloolefinkomplex des Platins enthaltenen Cycloolefin kann es sich um eine einzelne Art von Cycloolefin handeln. Es kann sich aber auch um ein Gemisch aus mindestens zwei verschiedenen Arten derartiger Cycloolefine handeln.

Beispiele für Cycloolefine mit zwei Kohlenstoff-Kohlenstoff-Doppelbindungen sind
1,7 -Cyclododekadien ($C_{12}H_{20}$)
1,8 -Cyclotetradekadien ($C_{14}H_{24}$)
1,8 -Cyclopentad ekadien ($C_{15}H_{26}$)
1,9 -Cyclohexadekadien ($C_{16}H_{28}$)
1,13 -Cyclotetracosadien ($C_{24}H_{44}$)
1,5,9,13-Tetramethyl-1,9-Cyclohexadekadien ($C_{20}H_{36}$)
Beispiele für Cycloolefine mit drei Kohlenstoff-Kohlenstoff-Doppelbindungen sind
1,7,13-Cyclooctadekatrien ($C_{18}H_{30}$)
1,8,15-Cycloheneicosatrien ($C_{21}H_{36}$)
1,9,17-Cyclotetracosatrien ($C_{24}H_{42}$)
1,5,9 -Trimethyl-1,5,9-cyclododekatrien ($C_{15}H_{24}$)
1,6,11-Trimethyl-1,6,11-cyclopentadekatrien ($C_{18}H_{30}$)
Beispiele für Cycloolefine mit vier Kohlenstoff-Kohlenstoff-Doppelbindungen sind
1,5,9,13 -Cyclohexadekatetraen ($C_{16}H_{24}$)
1,7,13,19-Cyclotetracosatetraen ($C_{24}H_{40}$)
1,9,17,24-Cyclodotriacontatetraen ($C_{32}H_{56}$)
1,5,9,13 -Tetramethyl-1,5,9,13-cyclohexadekatetraen ($C_{20}H_{32}$)
1,6,11,16-Tetramethyl-1,6,11,16-cycloeicosatetraen ($C_{24}H_{40}$)
Bei Halogenatomen X kann es sich um Fluor, Chlor, Brom oder Iod handeln. Chlor ist bevorzugt.

Bei den gesättigten oder ungesättigten organischen Resten X kann es sich um Alkylreste, die vorzugsweise 1 bis 4 Kohlenstoffatom(e) enthalten, wie der Methyl-, Ethyl-, n-Propyl-, Isopropyl-, n-Butyl-, sec.-Butyl- und tert.-Butylrest, besonders bevorzugt ist der Methyl- und Ethylrest, um Alkenylreste, wobei Ethen-, Propen- und 1-Butenreste bevorzugt sind, um Enolatreste, wie beispielsweise der Acetylacetonatrest, und um oligomere oder polymere Verbindungen, wie Polyole und unvernetzte Butadien- oder Isoprenkautschuke, handeln.

Rest X kann auch Organosiliciumreste, wie etwa ein Organopolysiloxanrest, oligomere oder polymere anorganische Reste, wie beispielsweise Phosphazene oder Polyphosphate, und anorganische Oxide, wie etwa $SiO_2$, $Al_2O_3$ oder Zeolithe, bedeuten.

Bei den im Cycloolefinkomplex des Platins enthaltenen Resten X kann es sich um eine einzelne Art von Rest X handeln. Es kann sich aber auch um ein Gemisch aus mindestens zwei verschiedenen Arten derartiger Reste X handeln.

Die Zahl z, das Molverhältnis von $PtX_2$ zu (cy), kann Werte zwischen 0,25 und 10 annehmen. Bevorzugt für z ist der Bereich zwischen 0,3 und 5, wobei der Bereich zwischen 0,5 und 2 besonders bevorzugt ist.

Der Platingehalt der erfindungsgemäßen Cycloolefinkomplexe des Platins liegt zwischen 10 und 60 Gewichtsprozent, bevorzugt zwischen 30 und 50 Gewichtsprozent.

Ein Zusammenhang zwischen dem Platingehalt $p_{Pt}$ der erfindungsgemäßen Cycloolefinkomplexe des Platins und dem Molverhältnis z läßt sich durch folgende Beziehung aufstellen:

$$z = \frac{(M_{(cy)}/M_{Pt}) \cdot p_{Pt}}{100 - (M_{PtX_2} / M_{Pt}) \cdot p_{Pt}}$$

$M_{(cy)}$ : Molekulargewicht des Cycloolefins
$M_{Pt}$ : Atomgewicht von Platin

$$M_{PtX_2}$$

: Molekulargewicht von $PtX_2$
$p_{Pt}$ : Platingehalt des Cycloolefinkomplexes in Gewichtsprozent

Beispiele für die erfindungsgemäßen Cycloolefinkomplexe des Platins sind

| | | |
|---|---|---|
| $(C_{12}H_{18}) \cdot zPtBr_2$ | | z = 0,3 - 3 |
| $(C_{14}H_{24}) \cdot zPtCl_2$ | | z = 0,3 - 2 |
| $(C_{15}H_{24}) \cdot zPt(CH_3)_2$ | | z = 0,3 - 3 |
| $(C_{16}H_{24}) \cdot zPt(CH_3)Cl$ | | z = 0,5 - 4 |
| $(C_{21}H_{36}) \cdot zPt(C_2H_5)_2$ | | z = 0,5 - 3 |
| $(C_{24}H_{44}) \cdot zPtI_2$ | | z = 0,5 - 2 |
| $(C_{24}H_{40}) \cdot zPtCl_2$ | | z = 0,6 - 4 |
| $(C_{32}H_{56}) \cdot zPt(CH_3)Br$ | | z = 0,6 - 4. |

Bevorzugte Cycloolefinkomplexe des Platins sind

$(C_{12}H_{18}) \cdot 0{,}62\ PtCl_2$
$(C_{15}H_{24}) \cdot 1{,}57\ PtCl_2$
$(C_{15}H_{24}) \cdot 1{,}02\ PtCl_2$
$(C_{16}H_{24}) \cdot 1{,}20\ PtCl_2$
$(C_{24}H_{42}) \cdot 2{,}46\ PtCl_2$
$(C_{24}H_{42}) \cdot 1{,}60\ PtCl_2$
$(C_{32}H_{56}) \cdot 1{,}49\ PtCl_2$.

Die erfindungsgemäßen Cycloolefinkomplexe des Platins der allgemeinen Formel (cy)•$zPtX_2$, wobei (cy), z und X die obengenannte Bedeutung haben, lassen sich erfindungsgemäß durch Reaktion eines unsubstituierten oder alkylsubstituierten Cycloolefins mit mindestens 12 Ringkohlenstoffatomen und mindestens zwei aliphatischen nicht-kumulierten Kohlenstoff-Kohlenstoff-Doppelbindungen oder einem Gemisch derartiger Cycloolefine mit einer Platinverbindung der allgemeinen Formel $M_aPtY_b \cdot nH_2O$, wobei M gleich oder verschieden sein kann und Wasserstoff, Alkalimetall oder Ammonium, welches mit Alkylgruppen, vorzugsweise Alkylgruppen mit 1 bis 4 Kohlenstoffatom(en), substituiert sein kann, bedeutet, Y die gleiche Bedeutung wie X hat, a 0, 1 oder 2, b 2, 3 oder 4, n eine ganze Zahl zwischen 0 und 6 und b gleich a + 2 ist, mit der Maßgabe, daß die Platin(II)-Verbindung als Komplex mit aliphatischen ungesättigten Kohlenwasserstoffen, vorzugsweise aliphatischen ungesättigten Kohlenwasserstoffen mit 2 bis 6 Kohlenstoffatomen, vorliegen kann, oder einem Gemisch derartiger Platinverbindungen bei Temperaturen vorzugsweise zwischen 0 und 60 °C, besonders bevorzugt zwischen 20 und 25 °C , unter Rühren in Gegenwart eines organischen Lösungsmittels herstellen. Die Umsetzung ist im allgemeinen nach zwei bis vier Tagen abgeschlossen.

Bevorzugte Rest Y sind Halogenatome, wie Fluor, Chlor, Brom oder Iod, und gesättigte oder ungesättigte organische Reste.

Bei den gesättigten oder ungesättigten organischen Resten Y kann es sich um Alkylreste, die besonders bevorzugt 1 bis 4 Kohlenstoffatom(e) enthalten, wie der Methyl-, Ethyl-, n-Propyl-, Isopropyl-, n-Butyl-, sec.-Butyl- und tert.-Butylrest, um Alkenylreste, wobei Ethen-, Propen- und 1-Butenreste besonders bevorzugt sind, und um Enolatreste, wie beispielsweise der Acetylacetonatrest, handeln.

Bei den erfindungsgemäß eingesetzten Platinverbindungen werden vorzugsweise Platindihalogenide, wie $PtCl_2 \cdot nH_2O$, $PtBr_2 \cdot nH_2O$ und $PtI_2 \cdot nH_2O$, Tetrahalogenoplatinsäuren, wie $H_2PtCl_4 \cdot nH_2O$ und $H_2PtBr_4 \cdot nH_2O$, Salze von Tetrahalogenoplatinsäuren, wie $Na_2PtCl_4 \cdot nH_2O$ , $K_2PtCl_4$, $KHPtCl_4 \cdot nH_2O$ , $(NH_4)_2PtCl_4$, $Na_2PtBr_4$ und $K_2PtBr_4$, und Platinhalogenidkomplexe mit aliphatischen ungesättigten Kohlenwasserstoffen, wie $K[(C_2H_4)PtCl_3]$, $[(C_2H_4) \cdot PtCl_2]_2$ und $[(C_3H_6) \cdot PtCl_2]_2$,verwendet, wobei n die obengenannte Bedeutung hat, mit der Maßgabe, daß hydratisierte Platinhalogenidkomplexe besonders bevorzugt

sind.

Bei der bei dem erfindungsgemäßen Verfahren eingesetzten Platinverbindung kann es sich um eine einzelne Art von Platinverbindung handeln. Es kann sich aber auch um ein Gemisch aus mindestens zwei verschiedenen Arten derartiger Platinverbindungen handeln.

Bei dem erfindungsgemäßen Verfahren werden als Lösungsmittel bevorzugt polare organische Lösungsmittel gegebenenfalls im Gemisch mit Wasser eingesetzt.

Beispiele für solche Lösungsmittel sind Alkohole, wie Methanol, Ethanol, n-Propanol, iso-Propanol und n-Butanol, Carbonsäuren, wie beispielsweise Essigsäure, chlorierte Kohlenwasserstoffe, wie Dichlormethan, Trichlormethan, Tetrachlormethan, 1,2-Dichlorethan und Trichlorethylen, und Ketone, wie Aceton, Methylethylketon und Methylisobutylketon.

Besonders bevorzugt werden bei dem erfindungsgemäßen Verfahren polare protische Lösungsmittel, wie Methanol, Ethanol, n-Propanol, iso-Propanol, n-Butanol und Essigsäure, Gemische aus mindestens zwei Arten derartiger Lösungsmittel sowie Gemische aus mindestens einer Art derartiger Lösungsmittel mit Wasser, wobei im Gemisch maximal 60 Gewichtsprozent Wasser enthalten ist.

Bei dem erfindungsgemäßen Verfahren können die oben beschriebenen Cycloolefine (cy), vorzugsweise als cis/trans-Isomerengemisch, deren Herstellung an sich bekannt ist, verwendet werden.

Beispielsweise können die erfindungsgemäß eingesetzten Cyclodiolefine metathetisch gemäß US-PS 4,668,836 (H.J.Eberle, Cons.f.elektrochem.Industrie.GmbH; ausgegeben am 26.Mai 1987) beziehungsweise der entsprechenden DE-OS 3,524,977 (ausgegeben am 22.Mai 1986) hergestellt werden. Dabei werden die Cyclodiolefine in Flüssigphase durch Metathesereaktion von Cycloalkylenen in Gegenwart eines Trägerkatalysators auf der Basis von $Re_2O_7/Al_2O_3$ hergestellt.

Die Darstellung von Cyclopolyolefinen kann zum Beispiel nach K.J. Ivin, "Olefin Metathesis", Academic Press, London, 1983 erfolgen.

Bei dem erfindungsgemäßen Verfahren kann das Molverhältnis von Cycloolefin (cy) zu Platinverbindung in der Reaktionslösung, welches das Molverhältnis von (cy) zu $PtX_2$ im Cycloolefinkomplex des Platins bestimmt, Werte zwischen 0,1 und 10, bevorzugt zwischen 0,8 und 5, besonders bevorzugt zwischen 1 und 3, annehmen.

Bei dem erfindungsgemäßen Verfahren beträgt die Platinkonzentration der Reaktionslösung 0,05 bis 0,25 mol/l, wobei eine Platinkonzentration von 0,10 bis 0,12 mol/l bevorzugt wird.

Das erfindungsgemäße Verfahren wird vorzugsweise bei einem Druck von 900 bis 1100 hPa (absolut) durchgeführt, oder falls erwünscht, auch bei höheren oder niedrigeren Drücken.

Bei dem erfindungsgemäßen Verfahren können die Reste X der erfindungsgemäßen Cycloolefinkomplexe des Platins der allgemeinen Formel $(cy)\cdot zPtX_2$, wobei (cy), z und X die obengenannte Bedeutung haben, direkt durch die Wahl der entsprechenden Edukte bestimmt werden. Eine andere Möglichkeit besteht darin, den erfindungsgemäßen Cycloolefinkomplex einer Austauschreaktion zu unterziehen, wobei der gewünschte Rest X, mit der Maßgabe, daß X die obengenannte Bedeutung hat, vorzugsweise über die entsprechende Verbindung MX, mit der Maßgabe, daß M und X die obengenannte Bedeutung haben sowie X in MX verschieden vom auszutauschenden Rest X des Platinkomplexes ist, in den Cycloolefinkomplex des Platins eingeführt wird. Bei dem erfindungsgemäßen Verfahren zur Herstellung von erfindungsgemäßen Halogen-freien Cycloolefinkomplexen des Platins wird die Austauschreaktion bevorzugt.

Nach Beendigung der erfindungsgemäßen Umsetzung eines unsubstituierten oder alkylsubstituierten Cycloolefins mit mindestens 12 Kohlenstoffatomen und mindestens zwei aliphatischen nicht-kumulierten Kohlenstoff-Kohlenstoff-Doppelbindungen oder einem Gemisch derartiger Cycloolefine mit einer Platinverbindung der Formel $M_aPt^{II}Y_b\cdot nH_2O$, wobei M, Y, a, b und n die obengenannte Bedeutung haben, mit der Maßgabe, daß die Platin(II)-Verbindung als Komplex mit aliphatischen ungesättigten Kohlenwasserstoffen vorliegen kann, oder einem Gemisch derartiger Platinverbindungen wird das Reaktionsgemisch nach an sich bekannten Verfahren, wie beispielsweise Kristallisation, Umfällen und Filtration, aufgearbeitet. Der erfindungsgemäße Cycloolefinkomplex des Platins wird mit einer Ausbeute von vorzugsweise 50 bis 90 %, bezogen auf elementares Platin, erhalten.

Eine ungenügende Aufarbeitung des Reaktionsgemisches kann zu Abweichungen der durchschnittlichen Summenformel der erfindungsgemäßen Cycloolefinkomplexe des Platins, etwa gemäß $(cy)\cdot zPtX_c$, wobei c von zwei verschiedene Werte annehmen kann und (cy), z sowie X die obengenannte Bedeutung haben, führen.

Die erfindungsgemäßen Cycloolefine des Platins können überall dort als Katalysator eingesetzt werden, wo monomere oder polymere Siliciumverbindungen mit Si-gebundenem Wasserstoff an monomere oder polymere Verbindungen mit aliphatischer Mehrfachbindung angelagert werden sollen. Bei dieser Anlagerung können je nach Wahl der aneinander anzulagernden Verbindungen andere monomere, dimere beziehungsweise polymere, Silicium enthaltende Verbindungen entstehen oder modifiziert werden.

Die angewendeten Mengen an erfindungsgemäßem Cycloolefinkomplex des Platins können im Rahmen des erfindungsgemäßen Verfahrens zum Anlagern von Siliciumverbindung mit Si-gebundenem Wasserstoff an aliphatische Mehrfachbindung die gleichen sein wie bei den bisher bekannten Verfahren zum Anlagern von Si-gebundenem Wasserstoff an aliphatische Mehrfachbindung. Aufgrund der hohen Wirksamkeit sowie der hohen Anfangsaktivität der erfindungsgemäßen Cycloolefinkomplexe des Platins als Katalysator sind Konzentrationen von vorzugsweise 0,1 bis 100 Gewichts-ppm, insbesondere 1 bis 50 Gewichts-ppm Platin, jeweils berechnet als elementares Platin, in der Reaktionsmasse zur Erzielung eines hohen Umsatzes sowie kurzen Reaktionszeiten bei der Anlagerung von Si-gebundenem Wasserstoff an aliphatische Mehrfachbindung völlig ausreichend.

Die angewendeten Temperaturen und Drücke können im Rahmen des erfindungsgemäßen Verfahrens zum Anlagern von Si-gebundenem Wasserstoff an aliphatische Mehrfachbindung ebenfalls die gleichen sein wie bei den bisher bekannten Verfahren zum Anlagern von Si-gebundenem Wasserstoff an aliphatische Mehrfachbindung. Da die erfindungsgemäßen Cycloolefinkomplexe des Platins eine hohe Wirksamkeit sowie eine hohe Anfangsaktivität zeigen, kann die Anlagerung von Si-gebundenem Wasserstoff an aliphatische Mehrfachbindung bei niederen Temperaturen, vorzugsweise bei Temperaturen zwischen -20 und 200 °C, besonders bevorzugt zwischen 15 und 110 °C, und einem Druck von vorzugsweise 900 bis 1100 hPa (absolut), durchgeführt werden, ohne einen niedrigen Umsatz sowie lange Reaktionszeiten in Kauf nehmen zu müssen.

Beispiele für die Herstellung von monomeren Siliciumverbindungen, bei der die erfindungsgemäßen Cycloolefinkomplexe des Platins als Katalysator angewendet werden können, sind die Herstellung von 3-Chlorpropyltrichlorsilan durch Umsetzung von Trichlorsilan mit Allylchlorid, die Herstellung von 3-Chlorpropylmethyldichlorsilan durch Umsetzung von Methyldichlorsilan mit Allylchlorid, die Herstellung von n-Propyltrichlorsilan durch Umsetzung von Propen mit Trichlorsilan, die Herstellung von Methacryloxypropyltrichlorsilan durch Umsetzung von Allylmethacrylat mit Trichlorsilan und die Herstellung von Vinylmethyldichlorsilan durch Umsetzung von Acetylen mit Methyldichlorsilan.

Beispiele für die Herstellung von dimeren beziehungsweise polymeren, Silicium enthaltenden Verbindungen, bei der die erfindungsgemäßen Cycloolefinkomplexe des Platins als Katalysator angewendet werden können, sind die Umsetzung von Vinyltrichlorsilan mit Trichlorsilan zu Bis-(1,2-trichlorsilyl)-ethan und die Herstellung von Organosiloxanen mit SiC-gebundenen Estergruppen durch Anlagern von mindestens einem Diester der Allylbernsteinsäure an Organosiloxan mit Si-gebundenem Wasserstoff.

Zur Modifizierung von polymeren, Silicium enthaltenden Verbindungen, bei der die erfindungsgemäßen Cycloolefinkomplexe des Platins als Katalysator angewendet werden können, gehört auch und insbesondere die Vernetzung, also Härtung oder Vulkanisation, von Massen auf der Grundlage von Alkenylgruppen, insbesondere Vinylgruppen, und Si-gebundenen Wasserstoff enthaltenden Organopolysiloxanen.

Die wesentlichen Bestandteile derartiger Massen sind, abgesehen von er£indungsgemäß verwendetem Cycloolefinkomplex des Platins (a)

b) Alkenylgruppen enthaltende Diorganopolysiloxane, insbesondere solche der Formel

$$R_2R^1SiO(R_2SiO)_dSiR^1R_2,$$

worin R gleiche oder verschiedene, von aliphatischen Kohlenstoff-Kohlenstoff-Mehrfachbindungen freie, einwertige, SiC-gebundene organische Reste, $R^1$ gleiche oder verschiedene Sic-gebundene organische Reste mit aliphatischer Kohlenstoff-Kohlenstoff-Mehrfachbindung und d eine ganze Zahl mit einem solchen Wert bedeutet, daß die durchschnittliche Viskosität dieser Diorganopolysiloxane 100 bis $10^6$ mPa•s bei 25 °C beträgt,

c) Verbindungen mit Si-gebundenem Wasserstoff, vorzugsweise lineare, cyclische oder verzweigte Organopolysiloxane aus Einheiten der Formel

$$R_eH_fSiO_{\frac{4-e-f}{2}},$$

worin R die oben dafür angegebene Bedeutung hat, e 0,1,2 oder 3, f 0 oder 1 und die Summe von e + f 0,1,2 oder 3 ist, mit der Maßgabe daS je Molekül mindestens zwei Si-gebundene Wasserstoffatome vorliegen.

Die Herstellung der vernetzbaren Massen auf der Grundlage von Alkenylgruppen und Si-gebundenen Wasserstoff enthaltenden Organopolysiloxanen kann durch Vermischen ihrer Bestandteile nach für die Bereitung von durch Anlagerung von Si-gebundenem Wasserstoff an aliphatische Mehrfachbindung vernetzbare Massen üblichen Verfahren erfolgen, wobei insbesondere bei schon bei Raumtemperatur vernetzbaren Massen im allgemeinen eine Komponente Bestandteil (a) und Bestandteil (b) und eine weitere Komponente Bestandteil (c) enthält.

Die erfindungsgemäßen Cycloolefine des Platins als Katalysator bei der Vernetzung von Massen auf der Grundlage von Alkenylgruppen und Si-gebundenen Wasserstoff enthaltenden Organopolysiloxanen werden bevorzugt zur Vernetzung solcher Massen, bei denen es sich beispielsweise um Einbettungsmassen für elektrische oder elektronische Vorrichtungen oder Beschichtungsmassen, einschließlich Massen zum Herstellen von klebrige Stoffe abweisenden Überzügen, zum Beispiel auf Papier, oder um Abformmassen, zum Beispiel für die Herstellung von Formkörpern aus Beton, insbesondere aber zum Erzeugen von Abdrücken von menschlichen oder tierischen Zähnen, handeln kann, angewandt.

Selbstverständlich können auch bei der erfindungsgemäßen Verwendung der Cycloolefinkomplexe des Platins als Katalysator die Anlagerung von Si-gebundenem Wasserstoff an aliphatische Mehrfachbindung bei Raumtemperatur verzögernde Mittel, wie Benzotriazol, 1,3-Divinyl-1,1,3,3-tetramethyldisiloxan und/oder 2-Methyl-3-butin-2-ol, erforderlichenfalls mitverwendet werden.

Des weiteren können die erfindungsgemäßen Cycloolefinkomplexe des Platins als Katalysator für der Hydrosilylierung eng verwandte Reaktionen wie Isomerisierung von Alkenen, beschrieben beispielsweise in A.J.Hubert, U. Reinhinger, Synthesis (1970) 405-30, Hydrierung von Alkenen, beschrieben beispielsweise in B.R.James, Advances in Organometallic Chemistry 17 (1979) 319-405, sowie Hydroformylierung von Alkenen, beschrieben beispielsweise in R.L.Pruett, Advances in Organometallic Chemistry 17 (1979) 1-60, geeignet sein.

Die erfindungsgemäßen Cycloolefinkomplexe des Platins als Katalysator bei der Anlagerung von Si-gebundenem Wasserstoff an aliphatische Mehrfachbindung haben den Vorteil, daß einerseits aufgrund ihrer hohen Wirksamkeit beziehungsweise ihrer hohen Anfangsaktivität mit geringeren Konzentrationen an Katalysator im Reaktionsgemisch als jenen bei den bisher beschriebenen Hydrosilylierungskatalysatoren erforderlichen gearbeitet werden kann und andererseits kürzere Reaktionszeiten und niedrigere Temperaturen für einen hohen Umsatz ausreichend sind. Außerdem weisen die erfindungsgemäßen Cycloolefinkomplexe des Platins eine hohe Beständigkeit der Wirksamkeit auf.

Ein weiterer Vorteil liegt in der guten Dosierbarkeit der erfindungsgemäßen Cycloolefinkomplexe des Platins. Insbesondere Cycloolefinkomplexe des Platins mit drei oder vier aliphatischen nicht-kumulierten Kohlenstoff-Kohlenstoff-Doppelbindungen können aufgrund ihrer sehr guten Löslichkeit in gängigen polaren organischen Lösungsmitteln, wie Dichlormethan, Trichlormethan oder Aceton, im allgemeinen homogen und damit völlig trübungsfrei in die Reaktionsmassen, speziell in die Reaktionsmassen auf der Grundlage von Alkenylgruppen und Si-gebundenen Wasserstoff enthaltenden Organopolysiloxanen, eingearbeitet werden.

In den folgenden Beispielen beziehen sich alle Angaben von Teilen, soweit nichts anderes angegeben ist, auf das Gewicht.

Die eingesetzten Cycloolefine wurden, wenn nichts anderes angegeben ist, nach den obengenannten Verfahren hergestellt. Alle eingesetzten Cycloolefine liegen als cis/trans-Isomerengemisch vor.

Sämtliche Infrarot-Daten wurden mit KBr-Preßlingen erhalten.

Beispiel 1

2,00 g $Na_2PtCl_4 \cdot 4H_2O$ werden in 40 ml n-Propanol gelöst, anschließend mit 0,80 g 1,5,9-Cyclododekatrien ($C_{12}H_{18}$;käuflich erhältlich bei Aldrich-Chemie GmbH & Co.KG, 7924 Steinheim) versetzt und bei Raumtemperatur gerührt. Nach 3 Tagen wird eine klare gelbe Lösung mit einem grauen pulverförmigen Niederschlag erhalten, welcher nach Abtrennung als NaCl identifiziert werden kann. Das Filtrat wird im Vakuum von Lösungsmittel befreit und der zurückbleibende gelbe Feststoff zweimal mit je 60 ml n-Hexan gewaschen. Nach dem Trocknen im Vakuum verbleiben 1,98 g eines gelben Pulvers, welches laut Elementaranalyse 37,1 Gewichtsprozent Platin enthält. Die Ausbeute beträgt, bezogen auf elementares Platin, 86 %.

Der Cyclododekatrienkomplex des Platins zeigt im Infrarotspektrum signifikante Banden bei 339, 706, 860, 966, 983, 1041, 1188, 1439, 1459, 1544, 2842, 2866, 2907, 2933 und 3006 $cm^{-1}$.

Beispiel 2

2,00 g $Na_2PtCl_4 \cdot 4H_2O$ werden in 40 ml n-Propanol gelöst, anschließend mit 0,88 g Trimethyl-1,5,9-cyclododektrien ($C_{15}H_{24}$; Gemisch der 1,5,9-Trimethyl- und der 3,7,11-Trimethylverbindung; käuflich erwerblich bei der Deutschen Shell Chemie GmbH, 6236 Eschborn) versetzt und bei Raumtemperatur gerührt. Nach 4 Tagen wird das ausgefallene NaCl abfiltriert und das Filtrat im Vakuum von Lösungsmittel befreit. Der braune Rückstand von öliger Konsistenz wird in 10 ml Dichlormethan gelöst. Nach erneuter Filtration wird das Filtrat im Vakuum von Lösungsmittel befreit und anschließend unter Rühren mit 20 ml n-Hexan versetzt. Nach Abtrennen des Feststoffs wird dieser dreimal mit 15 ml n-Hexan gewaschen und im Vakuum getrocknet. Es verbleiben 1,47 g eines hellbraunen Pulvers, welches laut Elementaranalyse 49,2 Gewichtsprozent Platin enthält. Die Ausbeute beträgt, bezogen auf elementares Platin, 84 %.

Der Trimethylcyclododekatrienkomplex des Platins zeigt im Infrarotspektrum signifikante Banden bei 1028, 1380, 1434, 1451, 1623 und etwa 2930 (breit) $cm^{-1}$.

Beispiel 3

Die in Beispiel 2 beschriebene Arbeitsweise wird wiederholt mit der Abänderung, daß anstelle der 0,88 g Trimethyl-1,5,9-cyclododekatrien 1,20 g Trimethyl-1,5,9-cyclododekatrien eingesetzt werden. Man erhält 1,66 g eines hellbraunen Pulvers, welches laut Elementaranalyse 41,8 Gewichtsprozent Platin enthält. Die Ausbeute beträgt, bezogen auf elementares Platin, 81 %.

Der Trimethylcyclododekatrienkomplex des Platins zeigt im Infrarotspektrum signifikante Banden bei 1028, 1380, 1434, 1451, 1623 und etwa 2930 (breit) $cm^{-1}$.

Beispiel 4

Die in Beispiel 2 beschriebene Arbeitsweise wird wiederholt mit der Abänderung, daß anstelle von 0,88 g Trimethyl-1,5,9-cyclododekatrien 1,10 g 1,5,9,13-Cyclohexadekatetraen ($C_{16}H_{24}$) und anstelle von n-Hexan n-Pentan verwendet wird. Es verbleiben 0,92 g eines hellbraunen Pulvers, welches laut Elementaranalyse 43,7 Gewichtsprozent Platin enthält. Die Ausbeute betragt, bezogen auf elementares Platin, 47 %.

Der Cyclohexadekatetraenkomplex des Platins zeigt im Infrarotspektrum signifikante Banden bei 332, 1436, 1452, 1620, 1708, 2870 und etwa 2930 (breit) $cm^{-1}$.

Beispiel 5

2,00 g $Na_2PtCl_4 \cdot 4H_2O$ werden in 20 ml n-Propanol gelöst, mit 1,60 g 1,9,17-Cyclotetracosatrien ($C_{24}H_{42}$) versetzt und bei Raumtemperatur gerührt. Nach drei Tagen wird das ausgefallene NaCl abfiltriert und das Filtrat im Vakuum von Lösungsmittel befreit. Der braune Rückstand von öliger Konsistenz wird nach der in Beispiel 2 beschriebenen Arbeitsweise aufgearbeitet. Man erhält 1,20 g eines gelben Pulvers, welches laut Elementaranalyse 48,7 Gewichtsprozent Platin enthält. Die Ausbeute beträgt, bezogen auf elementares Platin, 68 %.

Der Cyclotetracosatrienkomplex des Platins zeigt im Infrarotspektrum signifikante Banden bei 359, 723, 1350, 1456, 1506, 2855 und 2927 $cm^{-1}$.

Beispiel 6

Die in Beispiel 5 beschriebene Arbeitsweise wird wiederholt mit der Abänderung, daß anstelle der 1,60 g 1,9,17-Cyclotetracosatrien 2,90 g 1,9,17-Cyclotetracosatrien eingesetzt werden. Man erhält 1,86 g eines gelben Pulvers, welches laut Elementaranalyse 41,3 Gewichtsprozent Platin enthält. Die Ausbeute beträgt, bezogen auf elementares Platin, 90 %.

Der Cyclotetracosatrienkomplex des Platins zeigt im Infrarotspektrum signifikante Banden bei 339, 725, 1360, 1460, 1510, 1619, 2855 und 2926 $cm^{-1}$.

Beispiel 7

2,00 g $Na_2PtCl_4 \cdot 4H_2O$ werden in 40 ml n-Propanol gelöst, mit 10,00 g 1,9,17,25-Cyclodotriacontatetraen ($C_{32}H_{56}$) versetzt und bei Raumtemperatur gerührt. Nach 3,5 Tagen wird das ausgefallene NaCl abfiltriert und das Filtrat im Vakuum von Lösungsmittel befreit. Der braune Rückstand von öliger Konsistenz wird nach der in Beispiel 1 beschriebenen Arbeitsweise aufgearbeitet. Man erhält 1,31 g eines braunen

Pulvers, welches laut Elementaranalyse 34,7 Gewichtsprozent Platin enthält. Die Ausbeute beträgt, bezogen auf elementares Platin, 53 %.

Der Cyclodotriacontatetraenkomplex des Platins zeigt im Infrarotspektrum signifikante Banden bei 330, 724, 969, 1461, 1622, 2856 und 2926 $cm^{-1}$.

Beispiel 8

2,00 g $Na_2PtCl_4 \cdot 4H_2O$ werden in 40 ml n-Propanol gelöst, mit 2,12 g 1,8-Cyclotetradekadien ($C_{14}H_{24}$) versetzt und bei Raumtemperatur 2,5 Tage gerührt, wobei neben NaCl auch der entstandene Platinkomplex ausfällt. Nach destillativem Entfernen des Lösungsmittels wird der gelbe Rückstand in 120 ml destilliertem Wasser suspendiert, filtriert und zweimal mit je 30 ml destilliertem Wasser gewaschen. Der Feststoff wird anschließend zweimal mit je 30 ml Methanol und dreimal mit je 30 ml Dichlormethan gerührt, jeweils filtriert und anschließend im Vakuum getrocknet. Man erhält 2,00 g eines gelben Pulvers, welches laut Elementaranalyse 36,8 Gewichtsprozent Platin enthält. Die Ausbeute beträgt, bezogen auf elementares Platin, 86 %.

Der Cyclotetradekadienkomplex des Platins zeigt im Infrarotspektrum signifikante Banden bei 338, 791, 857, 974, 1258, 1445, 1538, 2856 und 2929 $cm^{-1}$.

Beispiel 9

2,00 g $Na_2PtCl_4 \cdot 4H_2O$ werden in 40 ml n-Propanol gelöst, mit 1,50 g 1,13-Cyclotetracosadien ($C_{24}H_{44}$) versetzt und 4 Tage bei Raumtemperatur gerührt, wobei neben NaCl auch der entstandene Platinkomplex ausfällt. Der Niederschlag wird abfiltriert und zweimal mit je 15 ml n-Propanol gewaschen. Man erhält ein graugelbes Pulver, welches in 20 ml Dichlormethan suspendiert, filtriert, mit Dichlormethan gewaschen und anschließend getrocknet wird.

Danach wird das Pulver in einem Gemisch aus 25 ml Wasser und 3 ml Aceton suspendiert, 2 Stunden gerührt, filtriert, mit Wasser und Aceton gewaschen und im Vakuum getrocknet. Man erhält 1,03 g eines hellgelben Pulvers, welches laut Elementaranalyse 32,5 Gewichtsprozent Platin enthält: Die Ausbeute, bezogen auf elementares Platin, beträgt 39 %.

Der Cyclotetracosadienkomplex des Platins zeigt im Infrarotspektrum signifikante Banden bei 338, 720, 841, 913, 1033, 1349, 1452, 1468, 1541, 2850, 2922 $cm^{-1}$.

Beispiel 10

Eine bestimmte Menge an Cycloolefinkomplex des Platins aus den Beispielen 1 bis 6 wird jeweils in wenig Dichlormethan beziehungsweise aus Beispiel 7 in wenig Aceton gelöst und die so erhaltenen Lösungen jeweils mit 100 g eines Vinyldimethylsiloxygruppen als endständige Einheiten aufweisenden Dimethylpolysiloxans mit einer Viskosität von 1300 mPa•s bei einer Temperatur von 25 °C vermischt. Die jeweilige Mischung wird bei Raumtemperatur und einem Druck von 1 hPa (absolut) so lange gerührt, bis das Lösungsmittel verdunstet ist. Die einzusetzende Menge des jeweiligen Platinkomplexes (circa 4 bis 6 mg) richtet sich nach dessen Platingehalt und wird so berechnet, daß der Platingehalt, bezogen auf elementares Platin, des in den endständigen Einheiten Vinyldimethylsiloxygruppen aufweisenden Dimethylpolysiloxans 20 ppm beträgt.

Das den jeweiligen Cycloolefinkomplex des Platins enthaltende in den endständigen Einheiten Vinyldimethylsiloxygruppen aufweisende Dimethylpolysiloxan wird 2 h bei einer Temperatur von 25 °C gelagert. Anschließend werden in 4,5 g dieser Mischung 0,5 g eines Mischpolymerisats aus Dimethylsiloxan-, Methylhydrogensiloxan- und Trimethylsiloxaneinheiten, wobei das Molverhältnis der Dimethylsiloxaneinheiten zu den Methylhydrogensiloxaneinheiten9 : 1 beträgt und das Mischpolymerisat eine Viskosität von 500 mPa•s bei einer Temperatur von 25 °C besitzt, eingerührt.

Die Zeit zwischen dem Beginn des Einrührens und merklicher Vernetzung der Masse (Vernetzungszeit) ist in Tabelle 1 für den jeweiligen Cycloolefinkomplex des Platins angegeben. Diese Zeitspanne ist der katalytischen Aktivität des jeweiligen Cycloolefinkomplexes des Platins indirekt proportional.

Tabelle 1

| Cycloolefinkomplex des Platins aus Beispiel | (cy) | Molverhältnis der Edukte (cy) :Pt | Ausbeute bezogen auf Platin in % | Platingehalt in Gewichtsprozent | z | Vernetzungszeit in Sekunden |
|---|---|---|---|---|---|---|
| 1 | $C_{12}H_{18}$ | 1,25 | 86 | 37,1 | 0,62 | 43 |
| 2 | $C_{15}H_{24}$ | 1,00 | 84 | 49,2 | 1,57 | 94 |
| 3 | $C_{15}H_{24}$ | 1,20 | 81 | 41,8 | 1,02 | 40 |
| 4 | $C_{16}H_{24}$ | 1,12 | 47 | 43,7 | 1,20 | 47 |
| 5 | $C_{24}H_{42}$ | 1,10 | 68 | 48,7 | 2,46 | 120 |
| 6 | $C_{24}H_{42}$ | 2,00 | 90 | 41,3 | 1,60 | 85 |
| 7 | $C_{32}H_{56}$ | 5,00 | 53 | 34,7 | 1,49 | 43 |

Beispiel 11

Die Arbeitsweise von Beispiel 10 wird wiederholt mit der Abänderung, daß eine bestimmte Menge an Cycloolefinkomplex des Platins aus den Beispielen 8 und 9 jeweils in wenig Dichlormethan suspendiert und jeweils mit 100 g eines Vinyldimethylsiloxygruppen als endständige Einheiten aufweisenden Dimethylpolysiloxans vermischt wird.

Tabelle 2

| Cycloolefinkomplex des Platins aus Beispiel | (cy) | Molverhältnis der Edukte (cy) :Pt | Ausbeute bezogen auf Platin in % | Platingehalt in Gewichtsprozent | z | Vernetzungszeit in Sekunden |
|---|---|---|---|---|---|---|
| 8 | $C_{14}H_{24}$ | 2,50 | 86 | 36,8 | 0,73 | 230 |
| 9 | $C_{24}H_{44}$ | 1,10 | 39 | 32,5 | 0,99 | 107 |

Vergleichsbeispiel 1

Dicyclopentadien-Platindichlorid ($dicpPtCl_2$) gemäß US-PS 4,276,252 (G. Kreis, Wacker-Chemie GmbH; ausgegeben am 30. Juni 1981) wird nach literaturbekannten Verfahren (J.Chatt, L.M.Vallarino, L.M.Venanzi, J.Chem.Soc.(London) (1957) 2496-505 und H.C.Clark, L.E.Manzer, J.Organometal.Chem. 59 (1973) 411-28) hergestellt. 7,00 g $K_2PtCl_4$ werden in 120 ml Wasser gelöst und mit 90 ml n-Propanol, 11,5 g Dicyclopentadien sowie 60 mg wasserfreiem $SnCl_2$ versetzt. Der nach zweitägigem Rühren bei Raumtemperatur ausgefallene, voluminöse Niederschlag wird abfiltriert und mit Wasser, wenig Ethanol und anschließend n-Hexan gewaschen. Der Niederschlag wird in Dichlormethan gelöst und anschließend bei einer Temperatur von -80 °C unter Zugabe von n-Hexan gefällt. Nach Filtration und Trocknen verbleiben 5,70 g $dicpPtCl_2$ als helles Pulver, welches laut Elementaranalyse 49,0 Gewichtsprozent Platin enthält. Die Ausbeute, bezogen auf elementares Platin, beträgt 85 %.

$DicpPtCl_2$ zeigt im Infrarotspektrum signifikante Banden bei 310, 331, 630, 725, 813, 832, 851, 898, 920, 948, 996, 1170, 1218, 1241, 1269, 1299, 1333, 1423, 1452, 2881, 2980 und 3038 $cm^{-1}$.

Eine bestimmte Menge an $dicpPtCl_2$ wird in Dichlormethan gelöst. Des weiteren wird nach der in Beispiel 10 beschriebenen Verfahrensweise gearbeitet, wobei eine schwache Trübung der $dicpPtCl_2$-Siloxan-Mischung zu beobachten ist.

Die Vernetzungszeit beträgt 380 Sekunden.

Vergleichsbeispiel 2

Norbornadien-Platindichlorid ($norPtCl_2$) gemäß JP-OS 79/76 529 (Shin-Etsu Chemical Industry Co., Ltd.; ausgegeben am 19. Juni 1979) und JP-OS 79/76 530 (Shin-Etsu Chemical Industry Co., Ltd.; ausgegeben am 19. Juni 1979) wird nach literaturbekannten Verfahren (E.W.Abel, M.A.Bennett, G.Wilkinson, J.Chem.Soc. (London) (1959), 3178-82, H.C.Clark, L.E.Manzer, J.Organometal.Chem. 59 (1973) 411-28 und

R.A.Alexander, N.C.Baenziger, C.Carpeter, J.R.Doyle, J.Am.Chem.Soc. 82 (1960) 535-8) hergestellt.

5,00 g $K_2PtCl_4$ werden in einem Gemisch von 100 ml Wasser und mit 75 ml n-Propanol gelöst, mit 50 mg wasserfreiem $SnCl_2$ sowie 3 ml Norbornadien versetzt und 4 Tage bei Raumtemperatur gerührt, wobei ein weißer Niederschlag entsteht. Der Niederschlag wird abfiltriert und mit n-Hexan gewaschen. Nach dem Trocknen im Vakuum verbleiben 1,70 g $norPtCl_2$ als weißes Pulver, welches laut Elementaranalyse 54,5 Gewichtsprozent Platin enthält. Die Ausbeute beträgt, bezogen auf elementares Platin, 40 %.

$NorPtCl_2$ zeigt im Infrarotspektrum signifikante Banden bei 292, 324, 342, 777, 801, 850, 972, 1183, 1229, 1312, 1391, 1438, 2930, 2961, 3057 und 3070 $cm^{-1}$.

Eine bestimmte Menge an $norPtCl_2$ wird in Dichlormethan suspendiert. Des weiteren wird nach der in Beispiel 10 beschriebenen Arbeitsweise gearbeitet, wobei eine deutliche Trübung der $norPtCl_2$-Siloxan-Mischung zu beobachten ist.

Die Vernetzungszeit beträgt 450 Sekunden.

Beispiel 12

8,61 g Allylacetat und 10 g Triethylsilan ($HSi(C_2H_5)_3$) werden in einen Kolben mit Rückflußkühler gegeben und bei einer Temperatur von 40 °C gerührt, wobei keine Additionsreaktion stattfindet. Nun wird jeweils so viel Cycloolefinkomplex des Platins aus den Beispielen 1,3 und 8 in fester Form zugegeben, daß der Platingehalt der Reaktionsmischung, jeweils bezogen auf elementares Platin, 50 ppm beträgt.

Um den Reaktionsverlauf verfolgen zu können, werden zu bestimmten Zeiten Proben entnommen und gaschromatographisch der Gehalt an 3-Additionsprodukt (3-Triethylsilylpropylester der Essigsäure) bestimmt. Tabelle 3 gibt den Gehalt der Reaktionsmischung in Gewichtsprozent an 3-Additionsprodukt bei der Addition von Triethylsilan an Allylacetat in Abhängigkeit von der Reaktionszeit wieder.

Tabelle 3

| Cycloolefinkomplex des Platins aus Beispiel | Reaktionszeit in Minuten bei 40 °C | | |
|---|---|---|---|
| | 15 | 50 | 150 |
| 1 | 18,3 | 56,0 | 84,8 |
| 3 | 25,3 | 61,4 | 84,3 |
| 8 | 16,9 | 43,1 | 84,0 |

Vergleichsbeispiel 3

Die in Beispiel 12 beschriebene Arbeitsweise wird wiederholt mit der Abänderung, daß anstelle des Cycloolefinkomplexes des Platins aus den Beispielen 1,3 und 8 Dicyclopentadien-Platindichlorid gemäß US-PS 4,276,252 (G. Kreis, Wacker-Chemie GmbH; ausgegeben am 30. Juni 1981) aus Vergleichsbeispiel 1 eingesetzt wird.

Tabelle 4 gibt den Gehalt der Reaktionsmischung in Gewichtsprozent an 3-Additionsprodukt bei der Addition von Triethylsilan an Allylacetat in Abhängigkeit von der Reaktionszeit wieder.

Tabelle 4

| Cycloolefinkomplex des Platins | Reaktionszeit in Minuten bei 40 °C | | |
|---|---|---|---|
| | 15 | 50 | 150 |
| $dicpPtCl_2$ | 8,9 | 36,6 | 83,3 |

## Patentansprüche

**1.** Cycloolefinkomplexe des Platins der allgemeinen Formel

(cy) • $zPtX_2$,

wobei (cy) ein unsubstituiertes oder alkylsubstituiertes Cycloolefin mit mindestens 12 Ringkohlenstoffatomen und mindestens zwei aliphatischen nicht-kumulierten Kohlenstoff-Kohlenstoff-Doppelbindungen oder ein Gemisch derartiger Cycloolefine, X gleiche oder verschiedene Halogenatome und/oder gleiche oder verschiedene gesättigte oder ungesättigte organische Reste und/oder gleiche oder verschiedene Organosiliciumreste und/oder gleiche oder verschiedene oligomere oder polymere anorganische Reste und/oder gleiche oder verschiedene anorganische Oxide und z eine Zahl zwischen 0,25 und 10 bedeutet und der Platingehalt der Cycloolefinkomplexe 10 bis 60 Gewichtsprozent beträgt, mit der Maßgabe, daß 1,5,9-Cyclododekatrien • $PtCl_2$ ausgenommen ist.

2. Cycloolefinkomplexe nach Anspruch 1, dadurch gekennzeichnet, daß (cy) ein unsubstituiertes oder alkylsubstituiertes Cycloolefin mit 12 bis 40 Ringkohlenstoffatomen bedeutet.

3. Cycloolefinkomplexe des Platins nach Anspruch 1 oder 2, dadurch gekennzeichnet, daß (cy) ein unsubstituiertes oder alkylsubstituiertes Cycloolefin mit drei oder vier aliphatischen nicht-kumulierten Doppelbindungen bedeutet.

4. Cycloolefinkomplexe des Platins nach einem oder mehreren der Ansprüche 1 bis 3, dadurch gekennzeichnet, daß z eine Zahl zwischen 0,3 und 5 bedeutet.

5. Verfahren zur Herstellung von Cycloolefinkomplexen des Platins gemäß Anspruch 1, dadurch gekennzeichnet, daß ein unsubstituiertes oder alkylsubstituiertes Cycloolefin mit mindestens 12 Ringkohlenstoffatomen und mindestens zwei aliphatischen nicht-kumulierten Kohlenstoff-Kohlenstoff-Doppelbindungen oder ein Gemisch derartiger Cycloolefine mit einer Platinverbindung der allgemeinen Formel $M_aPtY_b \cdot nH_2O$, wobei M gleich oder verschieden sein kann und Wasserstoff, Alkalimetall oder Ammonium, welches mit Alkylgruppen substituiert sein kann, bedeutet, Y die gleiche Bedeutung wie X hat, a 0, 1 oder 2, b 2, 3 oder 4, n eine ganze Zahl zwischen 0 und 6 und b gleich a + 2 ist, mit der Maßgabe, daß die Platin(II)-verbindung als Komplex mit aliphatischen ungesättigten Kohlenwasserstoffen vorliegen kann oder einem Gemisch derartiger Platinverbindungen im Molverhältnis 0,1 bis 10 in Gegenwart eines organischen Lösungsmittels umgesetzt wird und anschließend gegebenenfalls die im entstandenen Cycloolefinkomplex des Platins enthaltenen Substituenten X, wobei X gleiche oder verschiedene Halogenatome und/oder gleiche oder verschiedene gesättigte oder ungesättigte organische Reste und/oder gleiche oder verschiedene Organosiliciumreste und/oder gleiche oder verschiedene oligomere oder polymere anorganische Reste und/oder gleiche oder verschiedene anorganische Oxide bedeutet, durch Austauschreaktion mit MX, wobei M und X die obengenannte Bedeutung haben sowie X in MX verschieden vom Substituenten X des vorstehend erhaltenen Platinkomplexes ist, ersetzt werden.

6. Verfahren nach Anspruch 5, dadurch gekennzeichnet, daß die Platinkonzentration des Reaktionsgemisches 0,05 bis 0,25 mol/l beträgt.

7. Verfahren nach Anspruch 5 oder 6, dadurch gekennzeichnet, daß das organische Lösungsmittel polar ist.

8. Verfahren nach einem oder mehreren der Ansprüche 5 bis 7, dadurch gekennzeichnet, daß das Molverhältnis zwischen dem unsubstituierten oder alkylsubstituierten Cycloolefin mit mindestens 12 Ringkohlenstoffatomen und mindestens zwei aliphatischen nicht-kumulierten Kohlenstoff-Kohlenstoff-Doppelbindungen oder dem Gemisch derartiger Cycloolefine und der Platinverbindung der allgemeinen Formel $M_aPtY_b \cdot nH_2O$, wobei M gleich oder verschieden sein kann und Wasserstoff, Alkalimetall oder Ammonium, welches mit Alkylgruppen substituiert sein kann, bedeutet, Y die gleiche Bedeutung wie X hat, a 0, 1 oder 2, b 2, 3 oder 4, n eine ganze Zahl zwischen 0 und 6 und b gleich a + 2 ist, mit der Maßgabe, daß die Platin(II)-verbindung als Komplex mit aliphatischen ungesättigten Kohlenwasserstoffen vorliegen kann oder dem Gemisch derartiger Platinverbindungen 0,8 bis 5 beträgt.

9. Organosiliciumzusammensetzung enthaltend Cycloolefinkomplexe des Platins gemäß Anspruch 1 oder herstellbar nach dem Verfahren gemäß Anspruch 5.

10. Verwendung der Cycloolefinkomplexe des Platins gemäß Anspruch 1 als Katalysator für Hydrierung, Isomerisierung und Hydroformylierung von Alkenen.

## Claims

1. Cycloolefin complex of platinum of the general formula

   (cy) . $zPtX_2$,

   in which (cy) denotes an unsubstituted or alkyl-substituted cycloolefin having at least 12 ring carbon atoms and at least two aliphatic non-cumulated carbon-carbon double bonds or a mixture of such cycloolefins, X denotes identical or different halogen atoms and/or identical or different saturated or unsaturated organic radicals and/or identical or different organosilicon radicals and/or identical or different oligomeric or polymeric inorganic radicals and/or identical or different inorganic oxides and z denotes a number between 0.25 and 10, and the platinum content of the cycloolefin complex is 10 to 60% by weight, with the proviso that 1,5,9-cyclododecatriene . $PtCl_2$ is excepted.

2. Cycloolefin complex according to Claim 1, characterised in that (cy) denotes an unsubstituted or alkyl-substituted cycloolefin having 12 to 40 ring carbon atoms.

3. Cycloolefin complex of platinum according to Claim 1 or 2, characterised in that (cy) denotes an unsubstituted or alkyl-substituted cycloolefin having three or four aliphatic non-cumulated double bonds.

4. Cycloolefin complex of platinum according to one or more of Claims 1 to 3, characterised in that z is a number between 0.3 and 5.

5. Process for the preparation of cycloolefin complexes of platinum according to Claim 1, characterised in that an unsubstituted or alkyl-substituted cycloolefin having at least 12 ring carbon atoms and at least two aliphatic non-cumulated carbon-carbon double bonds, or a mixture or such cycloolefins, is reacted with a platinum compound of the general formula $M_aPtY_b.nH_2O$, in which M may be identical or different and denotes hydrogen, alkali metal or ammonium which may be substituted by alkyl groups, Y has the same meaning as X, a is 0, 1 or 2, b is 2, 3 or 4, n is an integer between 0 and 6 and b is equal to a + 2, with the proviso that the platinum(II) compound may be in the form of a complex with aliphatic unsaturated hydrocarbons, or a mixture of such platinum compounds, in a molar ratio of 0.1 to 10, in the presence of an organic solvent, and, if required, the substituents X present in the resulting cycloolefin complex of platinum, X denoting identical or different halogen atoms and/or identical or different saturated or unsaturated organic radicals and/or identical or different organosilicon radicals and/or identical or different oligomeric or polymeric inorganic radicals and/or identical or different inorganic oxides, are then replaced by an exchange reaction by MX, M and X having the abovementioned meaning and X in MX being different from the substituent X of the platinum complex obtained above.

6. Process according to Claim 5, characterised in that the platinum concentration of the reaction mixture is 0.05 to 0.25 mol/l.

7. Process according to Claim 5 or 6, characterised in that the organic solvent is polar.

8. Process according to one or more of Claims 5 to 7, characterised in that the molar ratio of the unsubstituted or alkyl-substituted cycloolefin having at least 12 ring carbon atoms and at least two aliphatic non-cumulated carbon-carbon double bonds, or the mixture of such cycloolefins, to the platinum compound of the general formula $M_aPtY_b.nH_2O$, in which M may be identical or different and denotes hydrogen, alkali metal or ammonium which may be substituted by alkyl groups, Y has the same meaning as X, a is 0, 1 or 2, b is 2, 3 or 4, n is an integer between 0 and 6 and b is equal to a + 2, with the proviso that the platinum(II) compound may be in the form of a complex with aliphatic unsaturated hydrocarbons, or the mixture of such platinum compounds, is 0.8-5.

9. Organosilicon composition containing cycloolefin complexes of platinum according to Claim 1 or preparable by the process according to Claim 5.

10. Use of the cyclolefin complexes of platinum according to Claim 1 as a catalyst for hydrogenation, isomerisation and hydroformylation of alkenes.

**Revendications**

1. Complexes cyclooléfiniques du platine de formule générale :

   $(cy) . zPtX_2$

   où (cy) est une cyclooléfine non-substituée ou à substitution alkyle, comportant au moins 12 atomes de carbone nucléaire et au moins deux doubles liaisons carbone-carbone aliphatiques non cumulées ou un mélange de cyclooléfines de ce genre, X représente des atomes d'halogène identiques ou différents et/ou des radicaux organiques saturés ou insaturés, identiques ou différents, et/ou des radicaux organiques du silicium, identiques ou différents, et/ou des radicaux minéraux, oligomères ou polymères, identiques ou différents, et/ou des oxydes minéraux, identiques ou différents, et z est un nombre compris entre 0,25 et 10, la teneur en platine des complexes cyclooléfiniques étant de 10 à 60 % en poids, du moment qu'est exclu le cyclododécatriène-1,5,9.$PtCl_2$.

2. Complexes cyclooléfiniques selon la revendication 1, caractérisés en ce que (cy) est une cyclooléfine ayant de 12 à 40 atomes de carbone nucléaire, non-substituée ou substituée par des radicaux alkyle.

3. Complexes cyclooléfiniques du platine selon la revendication 1 ou 2, caractérisés en ce que (cy) est une cyclooléfine non-substituée ou substituée par des radicaux alkyle, et comportant trois ou quatre doubles liaisons aliphatiques non cumulées.

4. Complexes cyclooléfiniques du platine selon l'une ou plusieurs des revendications 1 à 3, caractérisés en ce que z est un nombre compris entre 0,3 et 5.

5. Procédé pour préparer des complexes cyclooléfiniques du platine selon la revendication 1, caractérisé en ce qu'on fait réagir en présence d'un solvant organique une cyclooléfine non-substituée ou substituée par des radicaux alkyle et comportant au moins 12 atomes de carbone nucléaire et au moins deux doubles liaisons carbone-carbone aliphatiques non cumulées, ou encore un mélange de cyclooléfines de ce genre, avec un composé du platine de formule générale $M_aPtY_b.nH_2O$, où les radicaux M peuvent être identiques ou différents et représentent chacun un hydrogène, un métal alcalin ou un ammonium, pouvant être substitué par des groupes alkyle, Y a les mêmes significations que X, a vaut 0, 1 ou 2, b vaut 2, 3 ou 4, n est un nombre entier compris entre 0 et 6 et b vaut a + 2, du moment que le composé du platine (II) peut se présenter sous forme d'un complexe avec des atomes de carbone aliphatiques insaturés, ou encore avec un mélange de composés du platine de ce genre, selon un rapport en moles de 0,1 à 10 ; puis que l'on remplace éventuellement les substituants X contenus dans le complexe cyclooléfinique du platine tel que formé, où les radicaux X sont des atomes d'halogène identiques ou différents et/ou des radicaux organiques saturés ou insaturés identiques ou différents et/ou des radicaux organiques du silicium identiques ou différents et/ou des radicaux organiques oligomères ou polymères identiques ou différents et/ou des oxydes minéraux identiques ou différents, par une réaction d'échange avec MX, où M et X ont les significations données ci-dessus, le radical X de MX étant différent du substituant X du complexe du platine obtenu ci-dessus.

6. Procédé selon la revendication 5, caractérisé en ce que la concentration du platine dans le mélange réactionnel est de 0,05 à 0,25 mol/l.

7. Procédé selon la revendication 5 ou 6, caractérisé en ce que le solvant organique est polaire.

8. Procédé selon l'une ou plusieurs des revendications 5 à 7, caractérisé en ce que le rapport en moles entre $l_a$ cyclooléfine non-substituée ou substituée par des radicaux alkyle, comportant au moins 12 atomes de carbone nucléaire et au moins deux doubles liaisons carbone-carbone aliphatiques non cumulées, ou le mélange de cyclooléfines de ce genre, et le composé du platine de formule générale $M_aPtY_b.nH_2O$ où les radicaux M peuvent être identiques ou différents et représentent chacun un hydrogène, un métal alcalin ou un ammonium pouvant être substitué par des groupes alkyle, Y a les mêmes significations que X, a vaut 0, 1 ou 2, b vaut 2, 3 ou 4, n est un nombre entier compris entre 0

et 6 et b vaut a + 2, du moment que le composé du platine (II) peut être présent sous forme d'un complexe avec des hydrocarbures aliphatiques insaturés, ou avec le mélange de composés de platine de ce genre, vaut 0,8 à 5.

**9.** Composition organique du silicium contenant des complexes cyclooléfiniques du platine selon la revendication 1 ou pouvant être préparée par le procédé selon la revendication 5.

**10.** Utilisation des complexes cyclooléfiniques du platine selon la revendication 1 en tant que catalyseurs d'hydrogénation, d'isomérisation ou d'hydroformylation d'alcènes.